(19) Europäisches Patentamt
European Patent Office
Office européen des brevets

(11) **EP 2 194 359 A2**

(12) **EUROPÄISCHE PATENTANMELDUNG**

(43) Veröffentlichungstag:
**09.06.2010 Patentblatt 2010/23**

(51) Int Cl.:
***G01B 11/24*** *(2006.01)* ***B24B 9/00*** *(2006.01)*

(21) Anmeldenummer: **09178018.9**

(22) Anmeldetag: **04.12.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **05.12.2008 DE 102008060590**

(71) Anmelder: **Schneider GmbH + Co. KG**
**35239 Steffenberg (DE)**

(72) Erfinder:
• **Schneider, Gunter**
**35037 Marburg (DE)**

• **Gerrath, Torsten**
**35037 Marburg (DE)**
• **Krämer, Klaus**
**35232 Dautphetal-Friedendorf (DE)**

(74) Vertreter: **Thews, Gustav**
**STT Sozietät Thews & Thews**
**Patentanwälte**
**Augustaanlage 32**
**68165 Mannheim (DE)**

(54) **Verfahren und Vorrichtung zur Randvermessung von optischen Linsen**

(57) Die Erfindung bezieht sich auf ein Verfahren zum Ermitteln der Koordinaten K mindestens eines Punktes P1 auf einer Kante 1.1 einer optischen Linse 1, wobei die Linse 1 mittels einer Haltevorrichtung 3 mit der zu vermessenden Kante 1.1 in einen in Richtung einer Y-Achse verlaufenden Strahlengang 2.1 eines in Richtung einer Z-Achse messenden optischen Mikrometers 2 gehalten wird, wobei die relative Lage zwischen der Haltevorrichtung 3 und dem Mikrometer 2 bekannt ist, bei dem a) die Linse 1 mit der zu vermessenden Kante 1.1 in den Strahlengang 2.1 gehalten wird, b) eine erste Z-Koordinate Za für den im Strahlengang 2.1 in einer Positionen A befindlichen Punkt P1 der Kante 1.1 ermittelt wird, wobei eine X-Koordinate Xa des Punktes P1 der X-Koordinate einer Y-Z-Ebene des Strahlengangs 2.1 entspricht, c) eine Variation der relativen Lage zwischen der Linse 1 und dem Strahlengang 2.1 gewährleistet wird, die auf einer Verschwenkung beruht, d) eine zweite Z-Koordinate Zb in der variierten relativen Lage für den im Strahlengang 2.1 befindlichen Punkt P1 der Kante 1.1 ermittelt wird, e) auf Grundlage von zwei Gleichungssystemen für den Punkt P1 in den beiden Lagen die fehlenden Koordinaten Ya und Yb und damit die Lage des Punktes P1 ermittelt werden.

Messanordnung zum Vermessen einer Kante 1.1 einer Linse 1 mit einer Haltevorrichtung 3 für die Linse 1 und mit einem in Richtung einer Z-Achse messenden optischen Mikrometer 2 zum Generieren eines in Richtung einer Y-Achse verlaufenden Strahlengangs 2.1, innerhalb dessen die Linse 1 positionierbar ist, wobei die Haltevorrichtung 3 und der Strahlengang 2.1 relativ zueinander um eine Drehachse R drehbar sind, wobei eine Schwenkachse S vorgesehen ist, mittels der die Linse 1 und der Strahlengang 2.1 relativ zueinander um einen Winkel β schwenkbar sind, wobei die Schwenkachse S mit der Drehachse R einen Winkel δ einschließt, der größer ist als 10° und kleiner ist als 170°, oder ein in Richtung einer M-Achse verlaufender zweiter Strahlengang 2.1' vorgesehen ist, innerhalb dessen die Linse 1 positionierbar ist, wobei zwischen der M-Achse und der Y-Achse ein Winkel β vorgesehen ist, der kleiner als 90° ist.

Fig. 1a

**Beschreibung**

Die Erfindung bezieht sich auf ein Verfahren zum Ermitteln der Koordinaten mindestens eines Punktes P1 auf einer Kante einer optischen Linse, wobei die Linse mittels einer Haltevorrichtung mit der zu vermessenden Kante in einen in Richtung einer Y-Achse verlaufenden Strahlengang eines in Richtung einer Z-Achse messenden optischen Mikrometers positioniert wird, wobei die relative Lage zwischen der Haltevorrichtung und dem Mikrometer bekannt ist. Unter dem Begriff Linse sind dabei sowohl Rohlinge als auch Halbzeuge und fertige Linsen bzw. Brillengläser sowie Präzisionslinsen aus Mineralglas zu verstehen.

Für die Endbearbeitung von Brillengläsern müssen die meist noch runden Brillenglasrohlinge, die schon die komplette optische Funktion besitzen, auf das Brillengestell und die individuellen Kennwerte des jeweiligen Trägers (z. B. Augenabstand) angepasst werden. Hierzu kann im Allgemeinen der in der Maschine zur Randbearbeitung, dem so genannten Edger, eingespannte Rohling eingemessen werden. Danach erfolgt eine spanende Bearbeitung des Rohlings auf die Kontur der Endform mit einem Aufmaß. Es folgt eine erneute Messung in der vor allem die Lage der Kanten ermittelt werden soll, um entsprechende Formelemente wie Facetten oder Rillen in den Rand einzubringen. In der Praxis werden für die Vermessung der Linse heute meistens tastende Systeme eingesetzt, die die Front- und Rückseite der Linse bis nahe an den Rand messen. Nachteilig an den tastenden Systemen ist die Gefahr der Beschädigung des Brillenglases.

Es ist bereits ein Verfahren aus der EP 1 250 979 B1 bekannt, bei dem ein Laserstrahl auf den Rand der Linse projiziert wird und mit einer Kamera, die in einem festen Winkel zum Laserstrahl steht, die Reflexion aufgenommen wird und hinsichtlich des Radius und der Höheninformationen der Kanten ausgewertet wird. Nachteilig ist die starke Abhängigkeit von der Oberflächenqualität bzw. Oberflächenrauigkeit des Brillenrohlings, welche nach der Lehre dieser Druckschrift engen Toleranzen unterliegt. Zudem wird diese Art der Messung durch Feuchtigkeit auf der Linse beeinflusst. Fertige Linsen sind mangels Oberflächenrauigkeit mittels eines solchen Verfahrens nicht messbar.

Die DE 8715619 U1 beschreibt das Vermessen eines Brillengestells mit zwei rechtwinklig zueinander angeordneten Lasermikrometern. Es wird zwar erwähnt, dass Kanten vermessen werden, anhand der Beschreibung geht aber eindeutig hervor, dass nicht Kanten, sondern die Ausdehnung des Rahmens bestimmt wird, wobei ein äußerer Punkt des Rahmens nicht immer mit einer Kante zusammenfallen muss.

Eine ähnliche Lehre enthält die DE 38 27 122 C2, nach der nicht die Kante des Brillenglases, sondern die radiale Ausdehnung des Glases ermittelt wird, die wie am Beispiel eines konvexen Randes erkennbar nicht immer mit der Kante zusammenfallen muss.

Der Erfindung liegt die Aufgabe zugrunde, ein Verfahren und eine Vorrichtung derart auszubilden und anzuordnen, dass eine schnelle und präzise Vermessung einer Kante einer Linse gewährleistet ist.

Gelöst wird die Aufgabe erfindungsgemäß durch ein Verfahren nach Anspruch 1 und eine Vorrichtung nach Anspruch 10 oder 13.

Ein optisches Mikrometer ist eine Art Lichtvorhang bzw. Strahlengang mit einer entsprechenden Auswerteeinheit die bestimmt, welcher Teil des Strahlengangs abgeschottet bzw. abgeschattet oder abgeschwächt wird. Die Messstrategie basiert darauf, dass die Linse mit der zu vermessenden Kante in den Strahlengang gehalten wird, d. h. der Strahlengang tangiert sozusagen die Kante. Eine Kante, die mit Bezug zur Richtung des Strahlengangs hinter der Linse angeordnet ist, wird von der Linse verdeckt und befindet sich demnach nicht im Strahlengang. Auch wenn sich die Kante mit Bezug zur Richtung des Strahlengangs vor der Linse befindet, wird diese zwar vom Strahlengang erfasst, befindet sich aber nicht im Strahlengang, weil diese Höheninformation nicht detektiert wird. Zum Beispiel könnte die Linse auf einer Schwenkachse S so in eine Position A im Strahlengang gehalten werden, dass die Unter- bzw. Oberkante der Linse den höchsten (oder den niedrigsten) Wert im Strahlengang darstellt, also einen Maximalwert (oder einen Minimalwert) bildet. Hierdurch wird eine Höheninformation für einen Punkt P1 ermittelt. An welcher Stelle entlang des Strahls sich der Punkt P1 befindet, ist jedoch noch nicht bekannt. Hierzu wird die Linse beispielsweise in einem zweiten Winkel in einer Position B in den Strahlengang gehalten und ein weiterer Mikrometer-Messwert für den Punkt P1 erfasst. Dies ergibt ein Gleichungssystem mit zwei Unbekannten das gelöst werden kann, womit der eine Punkt P1 auf dem Rand der Linse eindeutig bestimmt werden kann. Durch eine Drehung bzw. Rotation der Linse um eine Drehachse R kann eine Reihe von Punkten P1 - Pn auf dem Linsenrand bestimmt werden. Die Position A und die Position B im Strahlengang können auch zusammenfallen. Es kommt auf die um einen Winkel $\beta$ verschwenkte relative Lage zwischen der Linse und dem Strahlengang an. Dieser Verschwenkung kann eine beliebige translatorische Bewegung überlagert werden, z. B. um die Linse bzw. den gewünschten Punkt wieder bzw. auch im Strahlengang zu positionieren.

Grundsätzlich muss der Schwenkpunkt Sp einen Abstand zum zu messenden Punkt P1, P1u aufweisen.

Durch das Vermessen zum Beispiel der Z-Koordinate eines Punktes P1 in zwei verschiedenen Schwenkpositionen A, B der Linse innerhalb des Strahlengangs lässt sich die Lage des Punktes P1 relativ zur Haltevorrichtung zum Beispiel auf Grundlage der folgenden Gleichungen einfach bestimmen.

$$\sin\alpha = \frac{Za}{r} \quad \text{und} \quad \sin(\alpha+\beta) = \frac{Zb}{r},$$

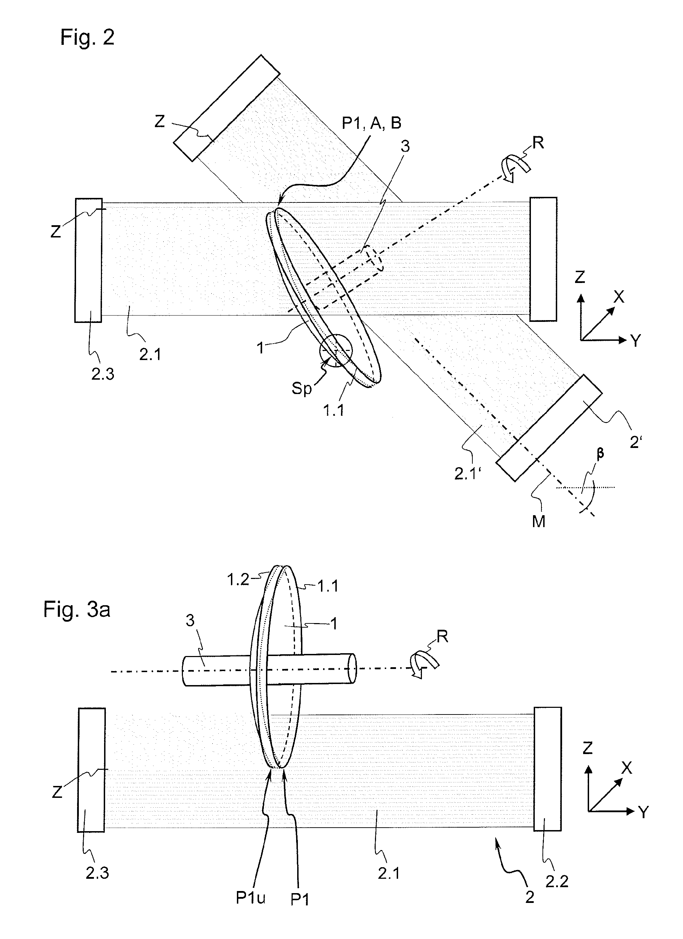

mit den beiden Unbekannten, den Winkel $\alpha$ und den Radius r. Die Winkel $\alpha$ und $\beta$ werden jeweils durch den Radius r und die Horizontale begrenzt, wie aus Figur 2 ersichtlich.

Nach Auflösen des Gleichungssystems ergibt sich die jeweilige Y-Koordinate aus folgender Gleichung:

$$Ya = \sqrt{r^2 - Za^2} \quad \text{und} \quad Yb = \sqrt{r^2 - Zb^2}$$

Die X-Koordinate ist für den Punkt P1 in beiden Positionen A und B bekannt. Die entspricht der X-Koordinate des Strahlengangs bzw. der durch ihn aufgespannten Y-Z-Ebene.

Entscheidend für die Detektierung einer Kante ist ein Winkel $\beta$, der kleiner ist als 90°. Ansonsten ist es nicht immer gewährleistet, dass die Kante in beiden Positionen A, B ein Minimum oder ein Maximum für den Mikrometerwert herstellt. Die Kante ist im Zweifel in einer der beiden Positionen im Schatten der anderen bzw. zweiten Kante.

Zwecks Gewährleistung einer größtmöglichen Präzision sollte der Winkel $\beta$ jedoch möglichst groß sein.

Erfindungsgemäß wird die Linse mit der zu vermessenden Kante in den Strahlengang gehalten, eine erste Z-Koordinate Za für den im Strahlengang in einer Position A befindlichen Punkt P1 der Kante ermittelt, wobei eine X-Koordinate Xa des Punktes P1 der X-Koordinate des Strahlengangs entspricht. Sodann wird die relative Lage zwischen der Linse und dem Strahlengang durch eine Verschwenkbewegung verändert oder alternativ die Linse von einem zweiten Strahlengang erfasst, der eine andere relative Lage zur Linse aufweist als der erste Strahlengang, wobei der erste Strahlengang relativ zum zweiten Strahlengang verschwenkt ist. Anschließend wird eine zweite Z-Koordinate Zb für den im Strahlengang in der Position A oder in einer zweiten Positionen B befindlichen Punkt P1 der Kante ermittelt, wobei die X- Koordinate Xb der X-Koordinate des Strahlengangs entspricht. Auf Grundlage von zwei Gleichungssystemen für den Punkt P1 für beide relative Lagen bzw. in der Position A oder in den beiden Positionen A und B im Strahlengang werden die fehlenden Koordinaten Ya und Yb und damit die Lage des Punktes P1 ermittelt.

Vorteilhaft kann es sein, wenn die Änderung der relativen Lage zwischen Linse und Strahlengang durch eine Änderung der Lage der Linse und/oder durch eine Änderung der Lage des Strahlengangs erfolgt. Die Änderung der Lage erfolgt vorzugsweise durch Verschwenken um eine Schwenkachse S um einen Winkel $\beta$. Dabei kann grundsätzlich die Linse und/oder der Strahlengang bzw. das optische Mikrometer verschwenkt werden. Dieser Verschwenkbewegung können beliebige translatorische Bewegungen überlagert werden, insbesondere um den gewünschten Punkt in der gewünschten Position im Strahlengang zu positionieren.

Vorteilhaft kann es auch sein, wenn der zweite Strahlengang relativ zum ersten Strahlengang um einen Winkel $\beta$ verschwenkt ist, wobei der zweite Strahlengang mittels eines zweiten Mikrometers oder durch Umlenkung von zumindest einem Teil des ersten Strahlengangs erhalten wird. Mit Einsatz eines zweiten Strahlengangs wird die Änderung der Lage der Linse oder des Strahlengangs überflüssig. Der Punkt P1 weist in dem jeweiligen Strahlengang eine unterschiedliche Position A, B auf, sodass das vorstehend beschriebene Gleichungssystem aufgestellt und ausgewertet werden kann. Die relative Lage zwischen beiden Strahlengängen bzw. beiden Mikrometern und der Haltevorrichtung ist bekannt.

Die Verschwenkung kann dabei mit Bezug zu der X-Achse und/oder zu der Z-Achse erfolgen.

Im Falle der Umlenkung des Strahlengangs ist zumindest ein zweiter Empfänger für den umgelenkten Strahlengang notwendig.

Dabei kann es vorteilhafterweise vorgesehen sein, dass der Winkel $\beta$ kleiner als 90° ist. In der Regel findet bei einer Verschwenkung der Linse um 90° oder mehr eine Überdeckung der Kanten statt, sodass ein Minimum oder Maximum für den Mikrometerwert nicht mit einer Kante erreicht werden kann. Dies liegt darin begründet, dass in der Regel die Randfläche der Linse zwischen beiden Kanten und die durch eine hintere bzw. obere oder untere Kante aufgespannte Ebene einen Winkel von 90° einschließt. Die Linse muss demnach mit Bezug auf die vorstehend genannte Ebene etwas angestellt sein gegenüber dem Strahlenverlauf des Mikrometers, um zum Beispiel einen ersten Mikrometerwert für die vordere Kante zu erhalten. Wenn ausgehend von dieser relativen Lage eine Verschwenkung von 90° erfolgt, wird die vordere Kante durch die hintere Kante mit Bezug zum Strahlenverlauf überdeckt.

Von besonderer Bedeutung kann für die vorliegende Erfindung sein, wenn die Messung für mehrere Punkte P1 bis Pn über den Umfang der zu vermessenden Kante erfolgt, wobei die Haltevorrichtung oder der Strahlengang bzw. das Mikrometer um eine Drehachse R rotieren. In der Regel ist nicht nur die Lage eines Punktes auf der Kante von Interesse, sondern die Lage der Kante als Ganzes, interpoliert über die Lage mehrerer Punkte auf dem Umfang der Kante. Die Erfassung verschiedener Punkte auf dem Umfang kann durch Drehung der Linse bzw. des Mikrometers bzw. des Strahlengangs um die Drehachse R erreicht werden.

Im Zusammenhang mit der erfindungsgemäßen Ausbildung und Anordnung kann es von Vorteil sein, wenn zunächst für mehrere Punkte P1 bis Pn in der Position A die jeweilige Koordinate Za ermittelt wird und anschließend in der veränderten Position B für die Punkte P1 bis Pn die jeweilige Koordinate Zb ermittelt wird. In der Regel ist die Lage beider Kanten der Linse zu bestimmen. Die erfindungsgemäße Vorgehensweise gilt für die zweite Kante entsprechend. Für zwei, mit Bezug zum Strahlengang gegenüberliegende, in einer Mess-Ebene liegende Punkte P1, P1u der Ober- und Unterkante sind demnach vier Messungen notwendig. Die erste Messung (erster Mikrometer-Messwert) erfolgt vorzugsweise für mehrere Punkte über den Umfang der Kante. Die Drehung um die Drehachse R erfolgt also vor dem Ändern der relativen Lage zwischen der Linse bzw. Kante und dem Strahlengang. Die Ermittlung des Mikrometerwertes für mehrere Punkte über den Umfang ist relativ schnell absolviert. Anschließend erfolgt die zweite Messung für einen zweiten Mikrometerwert für mehrere Punkte dieser Kante in der veränderten relativen Lage. Somit sind für mehrere Punkte einer Kante zwei Messungen erfüllt.

Für die zweite Kante erfolgt entsprechend eine erste Messung und eine zweite Messung, wobei die erste Messung für die zweite Kante auch vor der zweiten Messung für die erste Kante erfolgen kann.

Die Messgenauigkeit kann durch die folgend genannten Verfahren gesteigert werden, die alle darauf beruhen, dass eine größere Datenmenge generiert wird, die zwar zu einer Überbestimmung führen kann, welche aber z. B. durch entsprechende Mittelwertverfahren oder "Best-Fit-Verfahren" aufgelöst werden kann.

O Mehrfachdrehung der Drehachse. Somit werden verschiedene Teilabschnitte bzw. Punkte einer Kante wiederholt vermessen.

O Erhöhung der Anzahl der Punkte P1 - Pn auf dem Umfang. Je nach Auflösung kann die Anzahl der über den Umfang einer Kante ermittelten Punkte beliebig erhöht werden. Die zu interpolierenden Abschnitte bzw. Lücken werden somit kleiner. O Auswertung von mehr als zwei Positionen bzw. relative Lagen für einen Punkt. Dies wird durch entsprechend viele Schwenkpositionen oder mehrere Messsysteme bzw. Strahlengänge gewährleistet.

Vorteilhaft kann es ferner sein, wenn zwecks Messung mehrerer Punkte P1 bis Pn über den Umfang der Linse bzw. der Kante eine Relativbewegung zwischen der Linse und dem Strahlengang in eine Richtung einer X-Achse erfolgt. Der Abstand xR in Richtung X zwischen der Drehachse R und dem Strahlengang ist variabel bzw. verstellbar. Da ein Trend zu eckigen, sehr schmalen Brillengläsern besteht, werden heute schon Aufnahmen bzw. Blockstücke oder Haltewellen für die Brillengläser verwendet, die nicht rotationssymmetrisch sind. Damit hier eine Messung bis nahe an die Aufnahme bzw. Haltewelle möglich ist, kann der Drehbewegung der Linse um die Drehachse R eine Bewegung in X-Richtung überlagert werden, damit der Strahlengang nicht von der Aufnahme beeinflusst oder abgedeckt wird.

Außerdem kann es vorteilhaft sein, wenn die Ermittlung der Z-Koordinaten eines Punktes P1 auf einer Oberkante der Linse und die Ermittlung der Z-Koordinaten eines Punktes P1u auf einer Unterkante der Linse mit einem Strahlengang ohne Veränderung der relativen Lage zwischen der Linse und dem Strahlengang erfolgen. Je nach Höhe des Strahlengangs, der Geometrie der zu vermessenden Linse und der Winkellage zwischen der Linse und dem Mikrometer können gleichzeitig die Oberkante und die Unterkante vermessen werden. Die Anzahl der notwendigen Messungen, also zwei Messungen für die Oberkante und zwei Messungen für die Unterkante, kann auf drei bzw. zwei Messungen reduziert werden. Voraussetzung hierfür ist, dass in einer Position je ein Punkt von jeder Kante auf einmal ermittelt wird und anschließend für beide Punkte nur noch eine gemeinsame weitere Messung oder für jeden Punkt noch eine weitere Messung in einer anderen relativen Lage notwendig ist. Vorteilhaft ist es hierbei, wenn der Rand der Linse eben ist und die Winkellage des Randes im Verhältnis zur Drehachse R bekannt ist.

Ferner kann es vorgesehen sein, dass im Falle der Kenntnis der relativen Lage zwischen der Oberkante und der Unterkante nur Koordinaten von den Punkten P1 bis Pn der Oberkante ermittelt werden und daraus die Koordinaten P1u bis Pnu der Punkte der Unterkante ermittelt werden. Die Anzahl der Messungen wird somit auf zwei beschränkt.

Dabei kann es von Vorteil sein, wenn zwecks Bestimmung eines Anstellwinkels $\gamma$ einer an die Oberkante im Punkt P1 angrenzenden Oberfläche O bzw. einer im Punkt P1 in radialer Richtung zur Drehachse R anliegenden Tangente zunächst

a) die Linse mit dem Punkt P1 der Oberkante in den Strahlengang gehalten wird, so dass der Punkt P1 der Oberkante im Strahlengang ist bzw. ein Minimum oder ein Maximum für den Mikrometer-Messwert bildet,
b) ein Schwenkpunkt SP der Linse in den Punkt P1 gelegt wird,
c) die Linse solange um den Punkt P1 verschwenkt wird, bis die Oberfläche O bzw. die Tangente den gleichen bzw. einen minimal größeren Mikrometerwert aufweist wie der Punkt P1, womit die gedachte Tangente parallel zur Richtung Y ist,
d) aus der Lage der Drehachse R bzw. der Linse der Anstellwinkel $\gamma$ ermittelt wird.

Damit eine Bohrung in einem angepassten Winkel (meist rechtwinklig) zur Oberfläche der Linsenoberseite angebracht werden kann, ist zusätzlich zu der Lage der Kanten auch die Krümmung der Oberfläche im Randbereich interessant. Hierzu kann im Rahmen der Lagemessung der Oberkante die Linse so positioniert werden, dass die Oberkante ein Maximum oder ein Minimum bildet und solange um den Schwenkpunkt Sp (Punkt P1) geschwenkt wird, bis die Tangente denselben Messwert aufweist bzw. bis sich der Messwert ändert. Die Winkelstellung zwischen der Drehachse R und der Z-Achse bzw. Senkrechten stimmt dann mit der Winkelstellung zwischen Linsenrand und Tangente überein.

Schließlich kann es von Vorteil sein, wenn die Linse zwecks Kontrolle einer Bohrung und/oder Nut mittels der Drehachse R zumindest mit der Bohrung durch den Strahlengang gedreht wird. Zwecks Qualitätskontrolle können nach dem erfindungsgemäßen Verfahren sowohl der Umfang einer Linse als auch die Lage von Facetten überprüft werden. Zusätzlich können die Lage und die Form von Bohrungen oder Nuten überprüft werden. Insbesondere wenn Bohrungen nicht vollständig ausgeführt sind, das Werkzeug beim Bohren verlaufen ist oder das Werkzeug abgebrochen ist, lässt sich dies auf diese Weise einfach erkennen.

Die Erfindung betrifft auch eine Messanordnung zum Vermessen einer Kante einer Linse mit einer Haltevorrichtung für die Linse und mit einem in Richtung einer Z-Achse messenden optischen Mikrometer zum Generieren eines in Richtung einer Y-Achse verlaufenden Strahlengangs, innerhalb dessen die Linse positionierbar ist, wobei die Haltevorrichtung und der Strahlengang relativ zueinander um eine Drehachse R drehbar sind, wobei eine Schwenkachse S vorgesehen ist, mittels der die Linse und der Strahlengang relativ zueinander um einen Winkel β schwenkbar sind, wobei die Schwenkachse S mit der Drehachse R einen Winkel δ einschließt, der größer als 10° und kleiner als 170°, vorzugsweise zwischen 80° und 100° groß ist.

Vorrichtungsseitig kann es vorgesehen sein, dass die

Schwenkachse S mit der Y-Achse einen Winkel φ zwischen 80° und 100° einschließt.

Der Schwenkwinkel β sollte möglichst groß sein, wobei ein Wert von 90° nur in Ausnahmefällen das gewünschte Messergebnis gewährleistet. Ein Wert unter 90° führt auf jeden Fall zum gewünschten Ergebnis.

Es wäre nachteilig, die Drehachse R, insbesondere im Hinblick auf die mechanische Bearbeitung der Linse, in das Messsystem zu legen. Die Schwenkachse S kann jedoch entweder auf der Werkstückseite oder der Messsystemseite liegen.

Letztlich kann es von Vorteil sein, wenn die Drehachse R mit einem Abstand xR parallel zu einer Z-Y-Ebene des Strahlengangs verläuft oder einen Winkel ε mit der Z-Y-Ebene einschließt, der größer als 0° und kleiner als 20° ist.

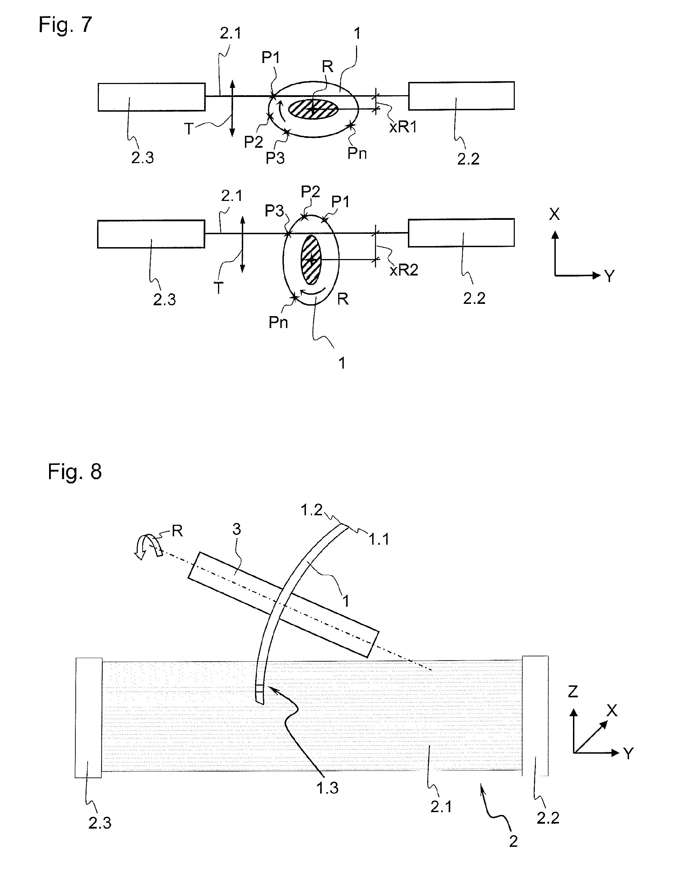

Da ein Trend zu eckigen, sehr schmalen Brillengläsern besteht, werden heute schon Blockstücke (Aufnahmestücke für die Brillengläser) verwendet, die nicht rotationssymmetrisch sind. Um hier eine Messung bis nahe an die Aufnahme zu ermöglichen, kann der Drehbewegung der Linse, wie in Figur 7 zu sehen, eine Bewegung in X-Richtung überlagert werden.

Die Erfindung betrifft auch eine vorstehend beschriebene Messanordnung, bei der im Unterschied ein in Richtung einer M-Achse verlaufender zweiter Strahlengang vorgesehen ist, innerhalb dessen die Linse positionierbar ist, wobei zwischen der M-Achse und der Y-Achse ein Winkel β vorgesehen ist, der kleiner als 90° ist, oder die Drehachse R mit einem Abstand xR parallel zu einer Z-Y-Ebene des Strahlengangs verläuft oder die Drehachse R einen Winkel ε mit der Z-Y-Ebene einschließt, der größer als 0° und kleiner als 20° ist. Für die erfindungsgemäße Auswertung reicht es aus, nur die Drehachse R zu haben und zwei Messsysteme bzw. Strahlengänge in unterschiedlichen Winkeln zur Drehachse R zu positionieren. Zwei Messsysteme bzw. Strahlengänge gewährleisten eine Verkürzung der Messzeit. Alternativ oder ergänzend kommt für den Abstand xR neben der Z-Y-Ebene auch die Z-M-Ebene in Betracht. Der Winkel β sollte wie schon beschrieben möglichst groß sein, aber 90° nicht erreichen.

Eine weitere Bewegungsachse T, mittels der die Linse und der Strahlengang relativ zueinander in Richtung einer X-Achse, rechtwinklig zur Y-Achse, bewegbar sind, gewährleisten einen geringen Abstand zwischen dem Strahlengang und der Drehachse bzw. der Aufnahme oder des Blockstücks, wie oben bereits beschrieben.

Wenn die Haltevorrichtung einseitig an der Linse festsetzbar ist, wie beispielsweise über ein an der Linse angebrachtes Blockstück, so bleibt für die relative Lage zwischen der Linse und dem Strahlengang mehr Handlungsspielraum. Eine Halbwelle für die Haltevorrichtung fehlt in diesem Fall. Durch die einseitige Einspannung kommt es zu keiner Kollision des Empfängers bzw. Senders mit der zweiten Halbwelle. Die Drehachse kann dabei vorzugsweise in der Z-Y-Ebene des Strahlenganges liegen.

Die vorstehend genannten Präpositionen wie "ober" und "unter" sowie die Bezeichnungen "Sender" und "Empfänger" können grundsätzlich auch vertauscht sein.

Weitere Vorteile und Einzelheiten der Erfindung sind in den Patentansprüchen und in der Beschreibung erläutert und in den Figuren dargestellt. Es zeigen:

Figur 1a     eine Prinzipskizze betreffend die Verschwenkung der Linse im Strahlengang;

Figur 1b     eine Prinzipskizze der geometrischen Grundlagen;

Figur 2     eine Prinzipskizze zur Verfahrensweise mit zwei Mikrometern;

Figur 3a      eine Prinzipskizze zur Verfahrensweise bei der Bestimmung von zwei Punkten gleichzeitig;

Figur 3b      eine Alternative zur Verfahrensweise bei der Bestimmung von zwei Punkten gleichzeitig;

Figur 4      eine Prinzipskizze zur Verfahrensweise zur Bestimmung der Tangente;

Figur 5      eine Prinzipskizze zur Verfahrensweise bei einer einseitigen Aufnahme;

Figur 6a      eine Prinzipskizze zur Lage und Bewegung der Achsen;

Figur 6b      eine Ansicht Fig. AA aus Figur 6a betreffend die Lage der Achsen M;

Figur 7      eine Prinzipskizze zur Verfahrensweise betreffend einer Relativbewegung in Richtung X;

Figur 8      eine Prinzipskizze zur Verfahrensweise zur Kontrolle von Bohrungen.

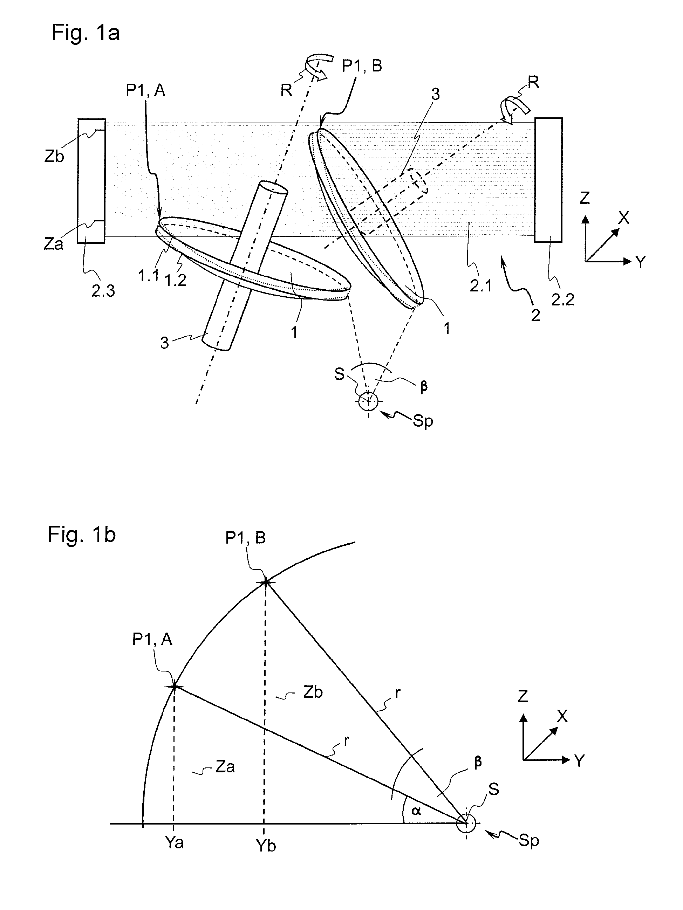

Der in Figur 1a dargestellte Messaufbau weist ein optisches Mikrometer 2 auf, mittels welchem ein in Richtung einer Y-Achse verlaufender Strahlengang 2.1 generierbar ist. Der Strahlengang 2.1 verläuft zwischen einem Sender 2.2 und einem Empfänger 2.3. Mittels des optischen Mikrometers 2 ist eine Lage bzw. Ausdehnung eines Punktes bzw. eines Körpers in Richtung einer Z-Achse in der Z-Y-Ebene des Strahlenganges 2.1 erfassbar.

Zwecks Bestimmung der Lage eines Punktes P1 einer Linse 1 wird diese mittels einer Haltevorrichtung 3 in einer ersten Position A im Strahlengang 2.1 positioniert, sodass der Punkt P1 einen Messwert generiert, wohingegen allen anderen Punkten der Linse 1, die sich nicht im Strahlengang 2.1 befinden, kein Messwert zukommt. Mittels des Mikrometers 2 ist somit eine erste Z-Koordinate Za ermittelbar.

Durch Verschwenken der Haltevorrichtung 3 mit der Linse 1 in eine zweite Position B um einen Winkel β, der vorzugsweise kleiner als 90° ist, gelangt der Punkt P1 in eine zweite Position B im Strahlengang 2.1, innerhalb derer er einen anderen Mikrometer-Messwert generiert. In dieser zweiten Position B kann die Z-Koordinate Zb des Punktes P1 ermittelt werden. Die Verschwenkung erfolgt dabei um einen Schwenkpunkt Sp bzw. einer Schwenkachse S um den besagten Winkel β.

Für den Punkt P1 in der jeweiligen Position A, B sind die Z-Koordinaten Za bzw. Zb sowie die X-Koordinate bekannt. Die X-Koordinate Xa, Xb entspricht dabei der X-Koordinate des Strahlengangs 2.1.

Diese geometrischen Verhältnisse lassen sich gemäß Figur 1b grafisch darstellen. Gesucht werden die beiden Koordinaten Ya und Yb für den Punkt P1 in der jeweiligen Position A, B. Unbekannt sind sowohl der Radius r als auch der

Anfangswinkel α zwischen dem Radius r in der Position A und einer Y-Achse. Mittels der nachstehenden Gleichungen lässt sich ein Gleichungssystem aufbauen und letztlich die beiden Y-Koordinaten Ya und Yb berechnen.

$$\sin\alpha = \frac{Za}{r} \quad \text{und} \quad \sin(\alpha+\beta) = \frac{Zb}{r},$$

$$Ya = \sqrt{r^2 - Za^2} \quad \text{und} \quad Yb = \sqrt{r^2 - Zb^2}$$

Die Haltevorrichtung 3 nach Figur 1a ist durch zwei nicht weiter beschriebene Halbwellen gebildet, zwischen denen die Linse 1 eingespannt ist. Die Haltevorrichtung 3 weist ferner eine Drehachse R auf, mittels der die Linse 1 konzentrisch durch die Haltevorrichtung 3 drehbar bzw. rotierbar ist. Zwecks Ermittlung weiterer Z-Koordinaten für mehrere Punkte der Kante 1.1 kann die Linse 1 in der jeweiligen Position A, B über die Drehachse R rotieren, sodass für beliebig viele Punkte Pn über den Umfang der jeweiligen Kante 1.1, 1.2 eine Z-Koordinate ermittelt werden kann. Auf diese Weise lässt sich die Lage der Kante 1.1 und entsprechend auch die Lage der Kante 1.2 ermitteln. Zwecks Ermittlung der Werte für eine Kante 1.1 muss die Linse 1 zunächst über die Haltevorrichtung 3 und die Schwenkachse S derart innerhalb des Strahlengangs 2.1 positioniert werden, dass die Kante 1.1 bzw. ein entsprechender Punkt P1 einen Minimal- bzw. Maximalpunkt darstellt, also innerhalb des Strahlengangs 2.1 angeordnet ist. Anschließend muss die Linse 1 in entsprechender Weise derart über die Schwenkachse S verschwenkt werden, dass eben dieselbe Kante 1.1 in der Maximalposition im Strahlengang 2.1 platziert ist, wobei der

Schwenkwinkel β möglichst groß, jedoch kleiner als 90° gewählt werden sollte. In beiden Positionen A, B kann die Linse 1 über die Drehachse R gedreht und somit beliebig viele Punkte über den Umfang der Kante 1.1 erfasst werden. Entsprechendes gilt für die Kante 1.2.

Gemäß Figur 2 ist es alternativ möglich, anstatt eine Verschwenkung der Linse 1 zwischen zwei Positionen A, B zu gewährleisten, zwei optische Mikrometer 2 einzusetzen. Während das erste Mikrometer 2 bzw. dessen Strahlengang 2.1 in Richtung der Y-Achse ausgerichtet ist, ist der Strahlengang 2.1' des zweiten Mikrometers 2' in Richtung einer M-Achse ausgerichtet. Die M-Achse ist bezüglich der Y-Achse um einen Winkel β verschwenkt bzw. angestellt. Die Verfahrensweise zur Erfassung der beiden Z-Werte Za und Zb für den Punkt P1 ist wie folgt. Die Linse 1 wird über eine nicht weiter dargestellte Haltevorrichtung 3 innerhalb des ersten Strahlengangs 2.1 und innerhalb des zweiten Strahlengangs 2.1' derart positioniert, dass ein Punkt P1 beispielsweise auf der Oberkante 1.1 innerhalb des Strahlengangs des ersten Mikrometers 2.1 und innerhalb des Strahlengangs 2.1' des zweiten Mikrometers 2' positioniert ist, wobei die Mikrometer-Messwerte, wie auch bei der Verfahrensweise nach Figur 1a, einen möglichst großen Unterschied aufweisen. Dieser Unterschied ist im Wesentlichen damit begründet, dass der Winkel β zwischen beiden Strahlengängen 2.1, 2.1' bzw. zwischen beiden Positionen A und B nach Figur 1a möglichst groß ist.

Bei der Verfahrensweise nach Figur 2 kann es grundsätzlich vorgesehen sein, dass die M-Achse um die X-Achse und/oder um die Z-Achse verschwenkt ist. Beides führt zu einer Anstellung gegenüber der Y-Achse und damit zu einer veränderten Schwenkposition.

Alternativ zu der Verfahrensweise nach Figur 2 kann es auch vorgesehen sein, dass unter Anwendung eines Mikrometers 2 und eines zusätzlichen, nicht dargestellten Umlenkspiegels eben zwei im Winkel β zueinander ausgerichtete Strahlengänge 2.1, 2.1' bereitgestellt werden, ohne ein zweites Mikrometer 2' einsetzen zu müssen. Jedoch ist ein zweiter Empfänger für den umgelenkten Strahlengang vorteilhaft.

Gemäß Verfahrensweise nach Figur 3a können die Z-Koordinaten zwei benachbarter Punkte P1, P1u einer Oberkante 1.1 und einer Unterkante 1.2 zeitgleich erfasst werden, sofern der zwischen beiden Kanten 1.1, 1.2 begrenzte Rand plan bzw. eben oder sogar konkav geformt ist. Beide Punkte P1, P1u bilden einen Maximalpunkt und befinden sich somit innerhalb des Strahlengangs 2.1, sodass für den jeweiligen Punkt P1, P1u nur noch eine weitere Messung in einer anderen relativen Lage B notwendig ist.

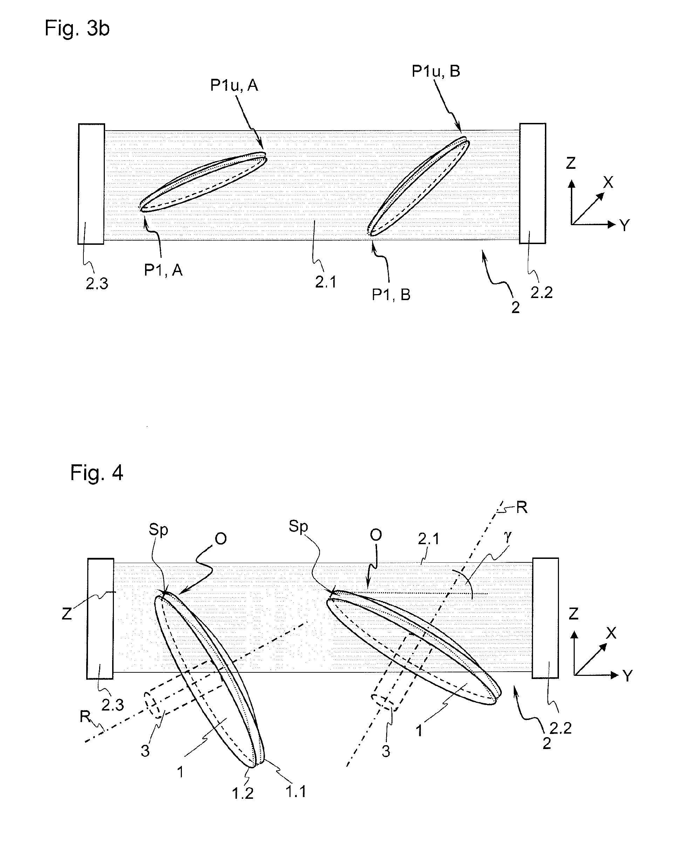

Alternativ können nach der Verfahrensweise gemäß Figur 3b ebenfalls zwei Punkte P1, P1u gleichzeitig vermessen werden, die jedoch gegenüberliegend angeordnet sind. In diesem Fall kann die zweite Messung auch für beide Punkte erfolgen, sodass insgesamt nur zwei Messungen für zwei Punkte notwendig sind.

Nach der Verfahrensweise gemäß Figur 1a und Figur 2 sind für jeden Punkt P1-Pn einer Oberkante 1.1 zwei Messungen notwendig und ebenfalls sind für jeden Punkt einer Unterkante 1.2 zwei Messungen notwendig. Nach der Verfahrensweise gemäß Figur 3a, 3b sind wie vorstehend beschrieben zur Ermittlung der zwei Z-Koordinaten für beide Punkte P1, P1u insgesamt dann nur noch drei bzw. zwei Messungen notwendig.

Mittels des erfindungsgemäßen Messaufbaus kann auch gemäß Figur 4 der Winkel bzw. die Anstellung einer an die Oberkante 1.1 anschließenden Fläche der Linse 1 ermittelt werden. Hierzu wird die Linse 1, wie sonst auch, derart im Strahlengang 2.1 positioniert, dass die Oberkante 1.1 im Strahlengang 2.1 positioniert ist (Maximal-Position). Sodann wird die Linse 1 um diesen Punkt, der nun als Schwenkpunkt Sp dient, geschwenkt, bis die an die Oberkante 1.1 anschließende Oberfläche O der Linse 1 diesen zuvor durch die Kante 1.1 generierten Messwert erreicht. Die Linse 1 wird also so lange geschwenkt, bis eine radial im Punkt Sp an der Kante 1.1 anliegende Tangente parallel zur Y-Achse, also in Richtung des Strahlengangs 2.1 ausgerichtet ist.

Der eingezeichnete Winkel γ stellt den Anstellwinkel zwischen dem Rand und der Oberfläche O dar. Auf dieser Grundlage lassen sich andere Winkelverhältnisse, wie beispielsweise zwischen dem Rand und der Drehachse R, ermitteln.

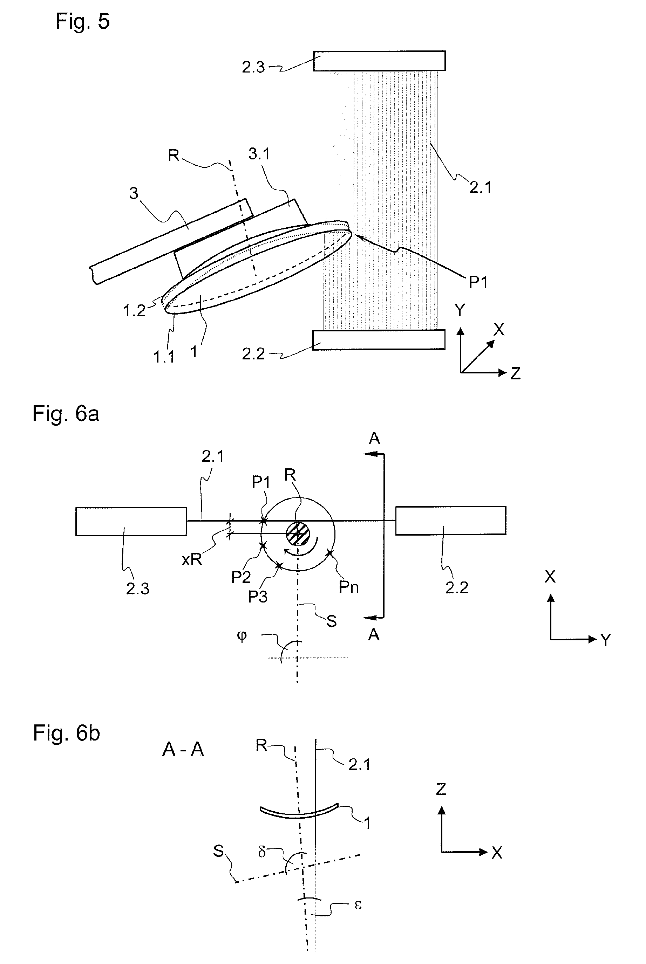

Gemäß Ausführungsbeispiel Figur 5 ist die Haltevorrichtung 3 einseitig ausgebildet. Die Linse 1 wird hierbei über ein Blockstück 3.1 gehalten, welches an der Haltevorrichtung 3 um die Drehachse R drehbar ist. Bei der Verwendung einer einseitigen Haltevorrichtung 3 ohne eine zweite Halbwelle ist der Einsatzbereich des Mikrometers 2 erweitert, weil eine Kollisionsgefahr zwischen dem Mikrometer 2 und einer zweiten Halbwelle 3 ausgeschlossen ist. Sollte die relative Lage zwischen der Ober- und der Unterkante 1.1, 1.2 der Linse 1 bekannt sein, dann ist es ausreichend, eine der beiden Kanten 1.1, 1.2 gemäß Figur 5 die Oberkante 1.1, zu vermessen und daraus auf die Lage der Unterkante 1.2 zu schließen.

Figur 6a zeigt die Versuchsanordnung aus Blickrichtung der Z-Achse, also mit Bezug zu den Figuren 1 bis 5 von oben.

Die Schwenkachse S schließt mit der Y-Achse einen Winkel φ von etwa 90° ein. Die Drehachse R weist zum Strahlengang 2.1 einen Abstand xR auf. Die Drehachse R rotiert in diesem Fall im Uhrzeigersinn, sodass für den Punkt P1 und nachfolgend für die Punkte P2, P3 bis Pn der jeweilige Z-Koordinatenwert durch Rotation um die Drehachse R ermittelt werden kann.

In Figur 6b ist der prinzipielle Versuchsaufbau in der Ansicht A-A aus Figur 6a, also von rechts dargestellt. Der Strahlengang 2.1 verläuft mit Bezug zu seiner Messrichtung in Richtung der Z-Achse im Wesentlichen vertikal. Die Drehachse R schließt mit der Z-Achse, also der Ebene des Strahlengangs 2.1, einen Winkel ε ein, der gemäß Figur 6b etwa 5° beträgt. Die Drehachse R kann grundsätzlich auch parallel zur Messebene 2.1 bzw. zur Z-Achse mit dem Abstand xR verlaufen.

Die Schwenkachse S ist gegenüber der X-Achse um einen Winkel γ von etwa 14° angestellt. Grundsätzlich kann die Schwenkachse S auch parallel zur X-Achse verlaufen.

Gemäß Ausführungsbeispiel Figur 7 ist die Haltevorrichtung bzw. Haltewelle 3 nicht rotationssymmetrisch, sondern in etwa an die ebenfalls nicht rotationssymmetrische Form der Linse 1 zwecks Optimierung der Unterstützung der Linse 1 bei der Bearbeitung angepasst. Damit die erfindungsgemäße Vermessung möglichst mit geringem Abstand xR erfolgen kann, ist eine Variation des Abstandes xR über eine weitere Bewegungsachse T, die hier als Translationsachse ausgeführt ist, vorgesehen. Mittels der Bewegungsachse T kann der Abstand xR zwischen den Werten xR1 und xR2 variiert werden, sodass während der Rotation um die Drehachse R (gemäß Pfeilrichtung) ein Abstand xR zwischen dem Strahlengang 2.1 und der Haltevorrichtung 3 möglichst gering gehalten werden kann, sodass ausgehend von der Vermessung des Punktes P1 auch der Punkt P3 erfasst werden kann und der Strahlengang 2.1 nicht durch die Haltevorrichtung 3 verdeckt würde. Die Bewegungsachse T kann auch als Rotationsachse ausgebildet sein.

Gemäß Versuchsaufbau nach Figur 8 kann eine Bohrung und/oder Nut 1.3 einer Linse 1 mittels des Mikrometers 2 geprüft werden. Sobald die Bohrung 1.3 Mängel, wie das Fehlen der Materialausnehmung, falsche Durchmesser oder verbleibende Rückstände wie abgebrochene Werkzeuge und Ähnliches, aufweist, würde durch diese der durch die Bohrung 1.3 fallende Strahlengang 2.1 beeinflusst und dies wiederum über den Empfänger 2.3 detektiert.

Bezugszeichenliste

| | |
|---|---|
| 1 | optische Linse, Linse |
| 1.1 | Kante, Oberkante |
| 1.2 | Kante, Unterkante |
| 1.3 | Bohrung |
| 2 | optisches Mikrometer |
| 2' | zweites Mikrometer |
| 2.1 | Strahlengang |
| 2.1' | Strahlengang |
| 2.2 | Sender |
| 2.3 | Empfänger |
| 3 | Haltevorrichtung, Haltewelle |
| 3.1 | Blockstück |
| A | Position |
| B | Position |
| K | Koordinate (X, Y, Z) |
| M | Achse |
| O | Oberfläche |
| P1 | Punkt |
| P2 | Punkt |
| P3 | Punkt |
| Pn | Punkt |
| P1u | Punkt |
| r | Radius, Abstand vom Schwenkpunkt SP |
| R | Drehachse |
| S | Schwenkachse |
| Sp | Schwenkpunkt |
| T | Bewegungsachse, Schwenk- oder Translationsachse |
| X | Achse |
| Y | Achse |
| Z | Achse |
| Xa | Koordinate |
| Xb | Koordinate |
| Ya | Koordinate |
| Yb | Koordinate |
| Za | Koordinate |
| Zb | Koordinate |

α    Winkel
β    Winkel
δ    Winkel
ε    Winkel
γ    Winkel
φ    Winkel

xR    Abstand
xR1    Abstand
xR2    Abstand

**Patentansprüche**

**1.** Verfahren zum Ermitteln der Koordinaten K mindestens eines Punktes P1 auf einer Kante (1.1) einer optischen Linse (1), wobei die Linse (1) mittels einer Haltevorrichtung (3) mit der zu vermessenden Kante (1.1) in einen in Richtung einer Y-Achse verlaufenden Strahlengang (2.1) eines in Richtung einer Z-Achse messenden optischen Mikrometers (2) gehalten wird, wobei die relative Lage zwischen der Haltevorrichtung (3) und dem Mikrometer (2) bekannt ist,
**dadurch gekennzeichnet, dass**

a) die Linse (1) mit der zu vermessenden Kante (1.1) in den Strahlengang (2.1) gehalten wird,
b) eine erste Z-Koordinate Za für den im Strahlengang (2.1) in einer Position A befindlichen Punkt P1 der Kante (1.1) ermittelt wird, wobei eine X-Koordinate Xa des Punktes P1 der X-Koordinate des Strahlengangs (2.1) entspricht,
c1) die relative Lage zwischen der Linse (1) und dem Strahlengang (2.1) durch eine Verschwenkbewegung verändert wird oder
c2) die Linse (1) von einem zweiten Strahlengang (2.1') erfasst wird, der eine andere relative Lage zur Linse (1) aufweist als der erste Strahlengang (2.1), wobei der erste Strahlengang (2.1) relativ zum zweiten Strahlengang (2.1') verschwenkt ist, und dass
d) eine zweite Z-Koordinate Zb für den im Strahlengang (2.1) befindlichen Punkt P1 der Kante (1.1) ermittelt wird,
e) auf Grundlage von zwei Gleichungssystemen für den Punkt P1 für beide relative Positionen die fehlenden Koordinaten Ya und Yb und damit die Lage des Punktes P1 ermittelt werden.

**2.** Verfahren nach Anspruch 1,
**dadurch gekennzeichnet, dass**
die Änderung der relativen Lage durch eine Änderung der Lage der Linse (1) und/oder durch eine Änderung der Lage des Strahlengangs (2.1) erfolgt.

**3.** Verfahren nach Anspruch 1 oder 2,
**dadurch gekennzeichnet, dass**
der zweite Strahlengang (2.1') relativ zum ersten Strahlengang (2.1) um einen Winkel β verschwenkt ist, wobei der zweite Strahlengang (2.1') mittels eines zweiten Mikrometers (2) oder durch Umlenkung von zumindest einem Teil des ersten Strahlengangs (2.1) erhalten wird.

**4.** Verfahren nach einem der vorhergehenden Ansprüche,
**dadurch gekennzeichnet, dass**
die Messung für mehrere Punkte P1 bis Pn über den Umfang der zu vermessenden Kante (1.1) erfolgt, wobei die Haltevorrichtung (3) und der Strahlengang (2.1) relativ zueinander um eine Drehachse R rotieren.

**5.** Verfahren nach Anspruch 4,
**dadurch gekennzeichnet, dass**
zunächst für mehrere Punkte P1 bis Pn in der Position A die jeweilige Koordinate Za ermittelt wird und anschließend in der veränderten Position B für die Punkte P1 bis Pn die jeweilige Koordinate Zb ermittelt wird.

**6.** Verfahren nach Anspruch 4 oder 5,
**dadurch gekennzeichnet, dass**
zwecks Messung mehrerer Punkte P1 bis Pn über den Umfang eine Relativbewegung zwischen der Linse (1) und dem Strahlengang (2.1, 2.1') in eine Richtung einer X-Achse erfolgt.

7. Verfahren nach einem der vorhergehenden Ansprüche,
**dadurch gekennzeichnet, dass**
die Ermittlung der Z-Koordinaten eines Punktes P1 auf einer Oberkante (1.1) der Linse (1) und die Ermittlung der Z-Koordinaten eines Punktes P1u auf einer Unterkante (1.2) der Linse (1) mit einem Strahlengang (2.1) ohne Veränderung der relativen Lage zwischen der Linse (1) und dem Strahlengang (2.1) erfolgen.

8. Verfahren nach einem der vorhergehenden Ansprüche,
**dadurch gekennzeichnet, dass**
zwecks Bestimmung eines Anstellwinkels $\gamma$ einer in an die Oberkante (1.1) im Punkt P1 angrenzenden Oberfläche O zunächst

a) die Linse (1) mit dem Punkt P1 der Oberkante (1.1) in den Strahlengang (2.1) gehalten wird,
b) ein Schwenkpunkt Sp der Linse (1) in den Punkt P1 gelegt wird,
c) die Linse (1) solange um den Punkt P1 verschwenkt wird, bis die Oberfläche O den gleichen oder einen größeren Mikrometerwert (2) aufweist wie der Punkt P1,
d) aus der Lage der Drehachse R der Anstellwinkel $\gamma$ ermittelt wird.

9. Verfahren nach einem der vorhergehenden Ansprüche,
**dadurch gekennzeichnet, dass**
die Linse (1) zwecks Kontrolle einer Bohrung (1.3) und/oder Nut mittels der Drehachse R zumindest mit der Bohrung (1.3) durch den Strahlengang (2.1) gedreht wird.

10. Messanordnung zum Vermessen einer Kante (1.1) einer Linse (1) mit einer Haltevorrichtung (3) für die Linse (1) und mit einem in Richtung einer Z-Achse messenden optischen Mikrometer (2) zum Generieren eines in Richtung einer Y-Achse verlaufenden Strahlengangs (2.1), innerhalb dessen die Linse (1) positionierbar ist, wobei die Haltevorrichtung (3) und der Strahlengang (2.1) relativ zueinander um eine Drehachse R drehbar sind,
**dadurch gekennzeichnet, dass**
eine Schwenkachse S vorgesehen ist mittels der die Linse (1) und der Strahlengang (2.1) relativ zueinander um einen Winkel $\beta$ schwenkbar sind, wobei die Schwenkachse S mit der Drehachse R einen Winkel $\delta$ einschließt, der größer als 10° und kleiner als 170°, vorzugsweise zwischen 80° und 100° groß ist.

11. Messanordnung nach Anspruch 10,
**dadurch gekennzeichnet, dass**
der Winkel $\beta$ kleiner als 90° ist.

12. Messanordnung nach einem der Ansprüche 10 oder 11,
**dadurch gekennzeichnet, dass**
die Drehachse R mit einem Abstand xR parallel zu einer Z-Y-Ebene des Strahlengangs (2.1) verläuft oder einen Winkel $\varepsilon$ mit der Z-Y-Ebene einschließt, der größer als 0° und kleiner als 20° ist.

13. Messanordnung zum Vermessen von Kanten (1.1) einer Linse (1) mit einer Haltevorrichtung (3) für die Linse (1) und mit einem in Richtung einer Z-Achse messenden optischen Mikrometer (2) zum Generieren eines in Richtung einer Y-Achse verlaufenden Strahlengangs (2.1), innerhalb dessen die Linse (1) positionierbar ist, wobei die Haltevorrichtung (3) und der Strahlengang (2.1) relativ zueinander um eine Drehachse R drehbar sind,
**dadurch gekennzeichnet, dass**
ein in Richtung einer M-Achse verlaufender zweiter Strahlengang (2.1') vorgesehen ist, innerhalb dessen die Linse (1) positionierbar ist, wobei zwischen der M-Achse und der Y-Achse ein Winkel $\beta$ vorgesehen ist, der kleiner als 90° ist oder die Drehachse R mit einem Abstand xR parallel zu einer Z-Y-Ebene des Strahlengangs (2.1, 2.1') verläuft oder die Drehachse R einen Winkel $\varepsilon$ mit der Z-Y-Ebene einschließt, der größer als 0° und kleiner als 20° ist.

14. Messanordnung nach einem der Ansprüche 10 bis 13,
**dadurch gekennzeichnet, dass**
eine weitere Bewegungsachse T vorgesehen ist, mittels der die Linse (1) und der Strahlengang (2.1, 2.1') relativ zueinander in Richtung einer X-Achse, rechtwinklig zur Y-Achse, bewegbar sind.

15. Messanordnung nach einem der Ansprüche 10 bis 14,

**dadurch gekennzeichnet, dass**
die Haltevorrichtung (3) einseitig an der Linse (1) festsetzbar ist.

Fig. 1a

Fig. 1b

Fig. 2

Fig. 3a

Fig. 3b

P1u, A

P1u, B

P1, A

P1, B

2.3

2.1

2.2

2

Z

X

Y

Fig. 4

Sp

O

Sp

O

2.1

R

γ

Z

Z

X

Y

R

2.3

3

1

1.2

1.1

3

1

2.2

2

Fig. 5

Fig. 6a

Fig. 6b

Fig. 7

Fig. 8

**IN DER BESCHREIBUNG AUFGEFÜHRTE DOKUMENTE**

**In der Beschreibung aufgeführte Patentdokumente**

- EP 1250979 B1
- DE 8715619 U1
- DE 3827122 C2